# EUROPEAN PATENT APPLICATION

(11) **EP 4 516 403 A1**
(43) Date of publication of application: **05.03.2025**
(21) Application number: 23194947.0
(22) Date of filing: 01.09.2023
(51) Int. Cl.: B01L 3/02, F04B 13/00, G01F 11/02, G01N 35/10

(54) **A DOSING TOOL FOR LIQUID HANDLING**

(71) Applicant: Eppendorf SE, 22339 Hamburg (DE)
(72) Inventor: Möller, Justus, 22339 Hamburg (DE); Flucke, Christian, 22339 Hamburg (DE)
(74) Representative: Høiberg P/S

(57) **Abstract**

The disclosure relates to a dosing tool for aspirating or dispensing a sample. The dosing tool comprises a piston and a dosing channel which comprises a transversely flexible section, which extend between a dosing chamber and a drive unit. This provides a dosing tool where the dosing chamber and the drive unit can be moved relative to each other thus allowing for a decentralised configuration. The disclosure further relates to a dosing system, a liquid handling device, a method and a computer implemented method relating to the dosing tool disclosed.

## Description

### Background

A common practise in sample preparation tasks in liquid handling systems is to use standardised labware articles. These labware articles are generally divided into two groups: tubes and plates. The selection of the labware articles can be constrained for example by the geometry and the design of the liquid handling systems.

Micro-test plates (MTP) are one of the commonly used labware articles. MTPs can have 96, 384 or 1536 small vessels, which are arranged in two directions, in an equidistant rectangular pattern with a distance of 9 mm, 4.5 mm or 2.25 mm, respectively. Such dimensions of micro-test plates and other well plates are set out in recognized standards, for example the ANSI SLAS 4-2004 (R2012), provided by the Society for Laboratory Automation and Screening (SLAS) Microplate Standard Advisory Committee as directed by the American National Standards Institute (ANSI).

The liquid handling system design and labware selection may be linked. For example, state of the art pipetting (dosing) systems with 8 dosing channels or even with 96 dosing channels can handle samples with the same liquid volume and concentration at the same time using a 96 vessel-MTP. Generally, these systems comprise a plurality of dosing tools, each having a piston and cylinder arrangement for handling samples within a rectangular grid arrangement. The piston and cylinder arrangements are driven by the same mechanism; e.g. all pistons are attached to the same drive-mechanism. The processing along the whole rows of plates of samples in parallel by means of the centrally driven plurality of dosing channels brings with it many constraints, such as the requirement of handling the same sample volume.

Samples may differ in terms of sample volume and sample concentration. The labware articles having vessels and/or plates which are used to store the sample and the distances between the vessels and/or plates may also differ. It is therefore a challenge to accommodate such differences when using the state of the art liquid handling tools and systems.

A further challenge in the liquid handling technologies is to handle samples within a tight spacing, for example when using grids of 9 mm, or even 4.5 mm or even 2.25 mm of the MTP. A general reconstruction of the liquid handling systems is expensive and has certain limitations. For example, the volumes of the samples which have to be pipetted may differ. It has yet not been possible to handle samples in large volumes, e.g. sample handling in deep well plates, tubes nor handling samples in smaller volumes, e.g. sample handling in MTP vessels with a narrow arrangement efficiently and simultaneously.

Many different devices can be acquired for liquid handling pipetting. It can be done by hand or dedicated devices can be obtained that perform dedicated routines and applications within a narrow area of liquid handling. Also, large batch machines are available that may provide a large throughput of liquid samples.

However, for some applications there is a need for automated liquid handling devices and machines which are designed to help automate routine liquid handling tasks to free up time where the manual liquid pipetting is too cumbersome and where the dedicated liquid handling machines does not provide sufficient flexibility and where the high-volume batch machines are too expensive and bulky.

For this segment there are provided desktop automated liquid handling devices, such as the epMotion range of liquid handling devices by Eppendorf.

Such automated liquid handling devices, also referred to as liquid handling devices herein,liquid handling devices enable a large range of pipetting liquid handling applications. One common feature is that these automated liquid handling devices comprises a worktable on which different types of labware can be placed depending on the specific need. The labware can for example be well plates, pipette tip containers, mixing stations and/or heating/cooling stations. The labware can be changed to suit the specific application and thus provide a highly flexible setup. A carrier arm can be fitted with a dosing tool and may move between the labware on the worktable to perform programmed pipetting actions. Automated liquid handling devices or automated liquid handling systems are used, in particular, in biological, biochemical, medical, forensic or chemical laboratories for handling mostly liquid laboratory samples. The handling operations in particular include metering, mixing, dividing, diluting, heating/cooling, biochemically or chemically altering, or analyzing the samples. In the process, the samples may be altered with regard to their quantity, composition, or physically, biochemically, chemically, or in another manner. Automated liquid handling devices are used, in particular, for producing dilution series, distributing reagents, transferring samples from vessels to plates, normalizing samples, PCR setups, real-time PCBs, purifying nucleic acids using magnetic bead methods, preparing samples for next-generation sequencing, and processing cell essays or routine pipetting procedures. Handling samples automatically is faster, more accurate and more reliable than doing so manually. An automated liquid handling device and a method for handling laboratory samples are for example described in EP 2 713 166 A1.

The automated liquid handling devices like ep Motion(R) 5070, 5073, 5075 by Eppendorf SE have a worktable with workstations for sample containers and storage areas for gripper and dosing tools. Samples can be stored and handled in the sample containers. The sample containers include, for example, reagent vessels, reaction vessels, reservoirs, microtiter plates (microplates), pipetting containers like pipette tips or syringes, and waste containers. Sample containers are commonly placed directly on the worktable of the liquid handling device or stored in storage devices on the on the worktable of the liquid handling device. In some cases the sample containers or storage devices may be placed outside of the automated liquid handling device. Said storage devices include, for example, pipette tip carriers, holders for pipette tip carriers, racks for reservoirs or vessels, and adapters for adjusting the height of microtiter plates. A carrier for pipette tips comprising a pipette tip holder and a pipette tip carrier is described in DE 10 2.009 006 511 B4. A modular storage system for laboratory liquids is described in EP 2 168 684 B1.

Furthermore, the automated liquid handling devices comprise an XYZ robot arm having a tool holder to which a gripper tool and/or a dosing tool can optionally be connected. A gripper tool, a pipetting tool and a tool holder for an automated liquid handling device are described in EP 1 407 861 B1. The robot arm can be moved in a program-controlled manner in order to pick up a gripper or dosing tool from a storage place or set said tool down thereon, to relocate sample containers in the work area using the gripper tool, to pick up and release pipette containers like pipetting tips or syringes using the pipetting tool, and to take up and dispense liquids using the pipette tips or syringes.

The dosing tools used with pipetting tips have at least one neck onto which a pipette tip can be clamped in a sealing manner. By means of a displacement apparatus arranged in the dosing tool and connected to a hole in the neck via a line, air can be displaced through an upper opening in the pipette tip in order to aspirate or expel liquid through a lower opening of the pipette tip. In the case of a multiple pipetting tool, the necks for clamping on pipette tips are arranged in one or more rows corresponding at least to some of the wells in a standardized microtiter plate. Standardized microtiter plates having 96 or 384 wells and multiple dosing tools adapted to the spacing of the wells are used, in particular. The pipette tips made of plastics material can be separated from the pipetting tool and discarded in a waste container after one single use in order to prevent cross-contamination of different laboratory samples during metering.

The workstations have a rectangular format adapted to the footprint of a standardized microtiter plate (SBS/ANSI format) in order to store thereon standardized microtiter plates, pipette tip carriers or other sample containers having a footprint that corresponds to the footprint of a standardized microtiter plate. The footprints of the workstations are limited by alignment means, which ensure precise alignment of the sample containers.

Therefore, there is a need in the art for improved liquid handling tools, which can offer an improved flexibility and efficiency in sample handling. In particular when combining the need to perform liquid handling in a tight spacing such as on the MTP plates with the desktop based liquid handling device high demands are required for space optimization and miniaturisation of components and workflows.

### Summary

The present approach alleviates the above-mentioned drawbacks and provides improved flexibility during pipetting/dosing.

The present approach provides dosing tools, systems, devices and methods having a scalable and individually adjustable architecture.

The present disclosure addresses the limitation in the state of the art in spatial relocation of dosing channels and can provide miniaturised assemblies that can fit into narrow spaces of the automated liquid handling devices. This can for example allow for automated liquid handling devices having a reduced footprint allowing them to be placed on smaller surfaces, for example on a desktop.

The present disclosure relates in a first aspect a dosing tool for aspirating or dispensing a sample, the dosing tool comprising:
- a piston movably arranged within a dosing channel, the piston having a distal end movably arranged within a dosing chamber and a proximal end,
- a drive unit engaging with the proximal end of the piston and configured to drive the piston by applying a force in an extending direction of the piston within the dosing channel,

wherein the dosing chamber is configured to receive a pipette tip, and
wherein the piston and the dosing channel comprise a transversely flexible section extending between the dosing chamber and the drive unit.

Thus, during dosing the distal end of the piston and the dosing channel engage a working volume of the pipette tip.

The disclosed dosing tool comprises a piston and a dosing channel, such as a cylinder, wherein the piston is movable within the dosing channel along an axial (extending) direction of the dosing channel. The dosing channel can have at least two parts, a dosing chamber and a flexible part, which may be a flexible chamber or a transversely flexible section. The dosing chamber can be provided at a distal end of the dosing tool. The distal end of the piston can slide within the dosing chamber, for example during dosing.

At least a part of the dosing channel is flexible. Furthermore, at least a part of the piston is flexible. In an axial (extending) direction, the piston and said flexible part of the dosing channel can be stiff. Preferably, the piston and the said flexible part of the dosing channel can be laterally, transverse to the extending direction, flexible. This implies that the flexible parts can easily bend and/or be stretched based on the elastic modulus of the material.

Furthermore, the piston is driven by a drive unit engaging with the proximal end of the piston. The flexible part of the cylinder can provide sufficient length to position the drive unit. Thus, the drive unit can be located further away from the dosing chamber. The drive unit can be located in any space wherein the drive unit and the dosing chamber is connected with a flexible section. The positioning of the drive unit can be adapted with increased freedom as the piston and the cylinder can flexibly move in the lateral direction. Consequently, the drive unit can be decentralised. Such decentralised arrangement may be obtained by arranging the drive unit and the dosing chamber such that they can be moved relative to each other, i.e. their relative position can be changed. For example, the position of the drive unit within an automated liquid dosing device can be maintained while the position of the dosing chamber within the automated liquid dosing device can be changed. As discussed, and will be further discussed, the flexible section allows for such relative change in the position between the drive unit and the dosing chamber and thus for example allows for an increased freedom of positioning the drive unit by a more flexible spatial arrangement of components.

The flexible spatial arrangement of the drive unit, motor and electronics can help with using the space optimally while enabling a compact design, e.g. a reduced footprint as discussed above, cost reduction and miniaturisation, while simultaneously allowing the use of a motor with a larger diameter and more power and at the same time addressing a large volume range of samples.

The present disclosure relates in a second aspect to a dosing system, comprising a plurality of dosing tools according to the present disclosure for receiving a one or more pipette tips, wherein each one of the drive unit of each dosing tool is decentralised away from the corresponding dosing chamber in a manner flexible in the transverse direction to the extending direction, such that each drive unit and the corresponding dosing chamber are moveable relative to each other.

The dosing system as described herein can offer a variety of possibilities in spatial design of independent dosing tools. Each dosing tool can have independent movement along a vertical axis as well as spannable distances to each other in order to serve different or even irregular vessel spacings. The spanning distance between each dosing tool can be arranged to address the labware article that is used and the dosing of each dosing tool can be operated simultaneously and individually. In this way, samples can be processed with the best possible flexibility and throughput.

Dosing tools generally can comprise at least one piston-cylinder unit. By moving the piston in opposite directions, a sample can be sucked in or dispensed through a dosing opening. The dosing tools can have different dimensions and designs accommodating the handling of different samples. By exchanging the dosing tool and/or pipette tips, it may be possible to carry out different dosing tasks. A great advantage of the present disclosure is that the proposed dosing tool can handle a variety of samples.

The present disclosure relates in a third aspect a liquid handling device for handling laboratory samples, comprising:
- a worktable area;
- multiple predefined workstations for laboratory items in the worktable area that have a format adapted to the footprint of a standardised microtiter plate;
- a carrier arm for moving tools above the work area;
- at least one dosing tool as disclosed herein,
wherein at least a dosing chamber of the dosing tool can be moved by means of the carrier arm, configured such that the at least one dosing chamber picks up and releases at least one pipette tip and/or aspirates and dispenses samples by means of the pipette tips in the worktable area.

The pipette tip of the dosing channel can aspirate and dispense samples from/to standardised labwares, such as standardised microplates, such as 96-well microtiter plates. The labwares can have plurality of vessels/working areas which are arranged with a predefined distance from each other. The liquid handling device can preferably be provided with a plurality of dosing tools to address a plurality of vessels. A great advantage of the present disclosure is that a row of dosing channels can aspirate an individual volume and be moved in variable heights to address the individual liquid meniscus of the corresponding sample being aspirated.

Furthermore, the pipettes can be moved and placed according to the equidistant grid distances of the source- and destination-vessels or even in irregular distances between vessels. The flexible parts can protrude upwards from the dosing chamber and can be to a part of the liquid handling system where it is out of the installation space with miniaturized constraints and where the drive units thus can be placed. As discussed above this provides a decentralised position of the dosing chamber and the drive units. Thus collisions can be avoided and there is more available moving spaces for other parts of the liquid handling system. Thus, by making use of the disclosed plurality of dosing tools, construction space can be saved and a desired narrow spacing of the individual dosing tools can be achieved. The drive units, pistons and cylinders can be spatially separated from the pipette tip. Accordingly, the desired grid distances of vessels, even in narrow configurations, can be addressed.

Automated liquid handling devices as disclosed herein usually comprise a worktable with a plurality of workstations on which samples can be handled or stored in different ways. The workstations typically have a rectangular format adapted to the footprint of a standardized microtiter plate (SBS/ANSI format) in order to store thereon standardized microtiter plates, pipette tip carriers or other sample containers having a footprint that corresponds to the footprint of a standardized microtiter plate. The footprints of the workstations are identified by alignment means, which ensure precise alignment of the sample containers.

For the transport of liquid samples between different positions, particularly of sample containers and storage devices, a program-controlled movement apparatus is usually used in conjunction with a dosing tool, which may, for example be a pipetting tool. Both the transport of the samples and the treatment thereof on the different stations can be automated under program control.

The present disclosure relates in a fourth aspect a method for handling laboratory samples, the method comprising:
- providing a carrier arm for moving tools above a worktable area;
- providing a plurality of dosing tools according as disclosed herein; and configured such that the plurality of dosing chambers of the dosing tools are movable by means of the carrier arm;
- receiving pipette tips from a pipette tip carrier on a predefined workstation in the worktable area by the plurality of dosing chambers;
wherein the pipette tips aspirate or dispense samples independently by each one of the plurality of dosing tools.

The present disclosure relates in a fifth aspect to a computer implemented method for handling laboratory samples independently wherein the method comprises the steps of:
- providing a plurality of dosing tools as disclosed herein 122,
- receiving a set of condition parameters, wherein the set of condition parameters is related to sample handling, such as sample aspiration and dispensing volume and positioning, and
- operating the corresponding drive unit for each dosing tools based on the received set of condition parameters.

The presently disclosed approach can address vessel-grid-distances of 9 mm or less while providing an independent dosing and positioning of a plurality of dosing tools simultaneously. The set of condition parameters can be any parameter related to the liquid handling task and the drive unit of each dosing tool can drive the piston and cylinder unit of each dosing tool simultaneously, such that independent dosing by each dosing tool can take place.

### Description of the drawings

The invention will in the following be described in greater detail with reference to the accompanying drawings:
Fig. 1 shows schematically an embodiment of a dosing tool,
Figs. 2a and 2b shows schematically the above embodiment of a dosing tool arranged in different configuration in a liquid handling device, and
Fig. 3 shows schematically a plurality of above embodiment of a dosing tool arranged in a liquid handling device.

### Detailed description

The dosing tool comprises a drive unit engaging with the proximal end of the piston and configured to drive the piston within the dosing channel. The dosing channel can be configured to receive a pipette tip. The piston and the dosing channel of the present disclosure comprises a transversely flexible section extending between the dosing chamber and the drive unit.

As described herein, the term "flexible" refers to a mechanical property of a part. The part can be easily bent because its Youngs modulus, or the modulus of elasticity, and its cross section are designed to lead to a low spring rate in at least one direction. Thus, the modulus of elasticity of the flexible part is lower than the modulus of the elasticity of the less flexible part. At least a part of the piston and at least a part of the dosing channel are more flexible transverse to the extending direction forming a transversely flexible section of the flexible parts. The flexible parts can be more stiff in an extending direction of the piston and the dosing channel.

As used herein, "stiff" refers to a mechanical property of a part. For stiff parts, the Youngs modules and the cross section are designed to lead to a high spring rate. Said flexible parts can be rigid in the extending direction, because in the extending direction said flexible parts can have higher modulus of elasticity.

### Piston

In an embodiment, the flexible section of the piston is more stiff in the extending direction than in the transverse direction and flexible transverse to the extending direction.

In an embodiment, the piston is made of a material selected from the group of: stainless steel, titan-nickel alloy, carbon- or glass-reinforced thermoplastic laminates.

In embodiments where the dosing channel comprises a flexible housing, e.g. in the shape of a hose, this can be formed of a titan-nickel alloy, for example when a friction-reduced piston material is used. The materials and their dimensions and tolerances should be chosen such that the interface between the outer surface of the piston and the inner surface of the flexible housing provides the desired friction to allow the piston to move freely within the flexible housing. The piston can be provided with a piston sealing at the distal end of the piston.

The piston may be a filament of carbon- and/or glass-fibre filled with thermoplastic polymer. A thermo-formed piston sealing on the distal ends and on the proximal end may be provided.

The piston material can be chosen such that the piston can have a reduced mass and mass inertia. Advantageously, with the proposed approach the inertial mass of the moving components can be reduced. The mass of the moving parts and consequently the inertia, and thereby the resistance of the piston against movement, can be optimized. This improves the control and accuracy during handling of samples.

In an embodiment, the piston comprises a friction reducing coating. The friction reducing coating may be a hydrophobic coating such as Teflon or PTFE coating. If the channel, such as the cylinder within which the piston slides, is made of hard, metallic material, a coating of the piston may be beneficial to reduce any friction.

### Dosing channel

The dosing channel can be assembled out of two parts: a flexible cylinder and a dosing chamber, such as a cylinder block. The diameter of the dosing channel can for example be between 2-5 mm and the piston can be designed and dimensioned to move low or minimal friction and in an airtight manner within the dosing channel. The cylinder block can have a connection element such as a cone for receiving pipette tips. As a result of this arrangement, the piston can move within the pipette tip thereby reducing the dead-volume in the working stroke to a minimum.

In an embodiment, the dosing channel comprises a flexible housing, such as a flexible channel, preferably a flexible cylinder, extending between the dosing chamber and the drive unit configured such that the piston extends within the flexible housing. In a further embodiment, the flexible housing is flexible transverse to the extending direction. Thus, the flexible cylinder can be laterally flexible and longitudinally stiff. The tubular fraction of the cylinder can be fixed to the cylinder block from one end and to the drive unit from the other end.

In an embodiment, the flexible housing, such as the flexible cylinder, is a tube made of plastic material, selected from the group of PTFE, PEEK or PE. In an embodiment, the flexible housing is a laterally flexible metal mesh hose.

Typically, part of the piston and the flexible housing, such as the flexible cylinder, forms the transversely flexible section extending between the dosing chamber and the drive unit as discussed herein.

In an embodiment, the dosing chamber is a cylinder block, having a pipetting channel oriented vertically within the cylinder block, and configured such that the distal end of the piston is slidable within the pipetting channel. The cylinder block can be a stiff part of the dosing channel.

The cylinder block can comprise a pipetting channel in z-direction within which the piston and the piston sealing can be guided. In an embodiment, the dosing tool comprises a piston seal arranged between the piston and the cylinder block configured to provide an air-tight seal between the piston and the cylinder block. The piston seal may be made of nitrile butadiene rubber (NBR) or silicone.

Furthermore, the cylinder block can be a support structure for a pressure sensor and a connection element.

### Drive unit

In an embodiment, the drive unit is decentralised away from the working volume in a manner flexible in the transverse direction to the extending direction. The construction space can be used with enhanced freedom as the drive units, pistons and cylinders can be spatially separated from each other, e.g. arranged decentralised as previously discussed.

This allows for a design, where the effect of the drive unit on the dosing quality can be better controlled. For example, by placing the drive unit(s) further away from the dosing chamber, the risk of thermal influences on the dosing quality, which may be caused by the power of the drive, can be prevented. Advantageously, improved dynamics when dispensing in free jet mode with small volumes can be achieved, e.g. by using a larger motor. A high speed dispensing with improved precision can be provided.

In an embodiment, the drive unit comprises an electric motor having a rotor configured to move the piston.

In another embodiment, the drive unit comprises an electric motor having a spring-preloaded arrangement configured to move the piston.

In a further embodiment, the drive unit comprises a linear motor having a rotor configured to move the piston.

The drive unit can comprise a motor which drives a spindle and a runner that is attached by a spindle nut connection. The piston can be fixed to the runner at the proximal end of the piston, configured such that the runner moves the piston. Furthermore, the motor can be combined with a winch, for re- and un-winding the flexible piston.

### Sensor

In an embodiment, the dosing tool comprises a sensor configured to detect pressure of the working volume within the cylinder block.

The pressure sensor can be connected to the working volume in the cylinder block via a pipe, which preferably has a small inner volume. The pressure measurement can be used to regulate the system and error monitoring during the pipetting procedure.

### Cone

In an embodiment, the dosing tool comprises a connection element having an opening and provided at a distal opening of the dosing channel, wherein the connection element is configured to receive a pipette tip.

The connection element can be designed as a conical, cylindrical or partly conical and partly cylindrical projection provided at the distal opening of the dosing channel. The pipette tip can be clamped onto the connection element at the upper end with a sealing. The lower distal opening of the connection element can engage with the opening of the pipette tips that are available in a pipette-tip holder, so that the pipette tip expands slightly and sits firmly on the connection element under tension.

A sample can be drawn into and dispensed from the pipette tip through a tip opening at the lower end of the pipette tip. After use, the pipette tip can be detached from the dosing tool and exchanged with fresh pipette tips.

### Dosing system

Additionally, the present disclosure relates to a dosing system comprising a plurality of dosing tools for receiving a plurality of pipette tips, wherein each one of the drive units of each dosing tool is decentralised away from the corresponding working volume in a manner flexible in the transverse direction, transverse to the extending direction. Thus, the system can comprise a plurality of pistons and a plurality of drive units, wherein each one of the pistons engages with one drive unit.

In an embodiment, the dosing system comprises a carrier movable in the extending direction, wherein the plurality of dosing tools are parallel next to one another and attached to the carrier.

Because of the flexibility in designing the piston and cylinder dimensions and in their respective positioning, the present disclosure can address a great variety of labware dimensions. In an embodiment, the dosing tools are arranged at a distance of 4.5 mm or more, preferably 9 mm or more measurable between a central line of neighbouring dosing tools.

Furthermore, because every pipette channel of the pipetting system can aspirate and dispense an individual volume, each volume can address a different working volume range. The lower boundary of a working volume range can for example be 0.1 µl, 0.2 µl or 0.5 µl and the upper boundary of a working volume range can for example be 1000 µl, 2000 µl, 3000 µl, 5000 µl or 10000 µl. Thus, in an embodiment, the working volume is in the range of 0.1 µl -1000 µl. In another embodiment, the working volume is in the range of 1000 µl -10000 µl. In yet another embodiment, the working volume is in the range of 0.1 µl -10000 µl. In another embodiment the working volume is in the range of 500 µl -10000 µl.

In an embodiment, the system comprises a plurality of pipette tips. In a further embodiment, each of the pipette tips is received by a respective dosing tool of the plurality of dosing tools. The dosing tools are configured such that each of the plurality of dosing tools is driven individually in the extending direction and in the transverse direction, thereby spreading the movement of each of the pipette tips.

In an embodiment, the distance between the neighbouring pipette tips is between 4.5-150 mm, preferably between 9-150 mm. Typically the distance will correspond to the ANSI standard set as described previously.

### Dosing method

The present disclosure further relates to a method for handling laboratory samples. The method comprises the steps of providing a carrier arm for moving tools above a worktable area; providing a plurality of dosing tools as presently described configured such that the plurality of dosing tools are movable by means of the carrier arm. The method further comprises the step of receiving pipette tips from a pipette tip carrier on a predefined workstation in the worktable area by the plurality of dosing tools. The pipette tips can aspirate or dispense samples independently by each one of the plurality of dosing tools.

In a further embodiment, the method comprises the step of providing pipette tips in a pipette tip carrier on a predefined workstation in the worktable area. The pipette tip carrier can be a holder having specified dimensions and holding a pre-defined kind of pipette tips.

In an embodiment, the method comprises the step of providing the dosing system as described herein.

In an embodiment, the laboratory samples are handled within the liquid handling device of the present disclosure.

The present approach further relates to a computer-implemented method for handling laboratory samples independently. The method comprises the step of receiving a set of condition parameters. The set of condition parameters can be based on the sample handling process. The set of condition parameters may for example relate to sample aspiration and dispensing volume, the positioning of the labware and/or the positioning of the respective dosing tool to address a labware's vessels or tubes. The set of condition parameters may also concern positioning of the pipette tip holder. The set of condition parameters can therefore be used to define the sample handling process. The amount of the sample that can be aspirated and the amount of sample that can be dispensed at a time can be defined. This implies that an individual dosing tool can dispense a predefined amount of sample at a time. Thus, a dispensing volume of a sample by a first dosing tool can differ from a dispensing volume of a sample by a second dosing tool. The first dosing tool may aspirate and dispense the same volume of lubricant and/or the second dosing tool can perform successive dispensing of the aspirated sample. The corresponding drive unit for each dosing tools can operate based on the received set of condition parameters.

The method can comprise the step of positioning the pipette tip relative to the meniscus of the liquid volume by means of a carrier arm. The cylinder block of the dosing tool can be attached to a carrier arm of the automated liquid handling device. A plurality of dosing tools can be coupled or attached to one carrier arm. The carrier arm can be configured to move every attached dosing tool individually in the vertical axis (z-axis) perpendicular to the meniscus. The carrier arm can also be configured such that the dosing tools can span/spread from a neighbouring dosing tool.

### Detailed description of the drawings

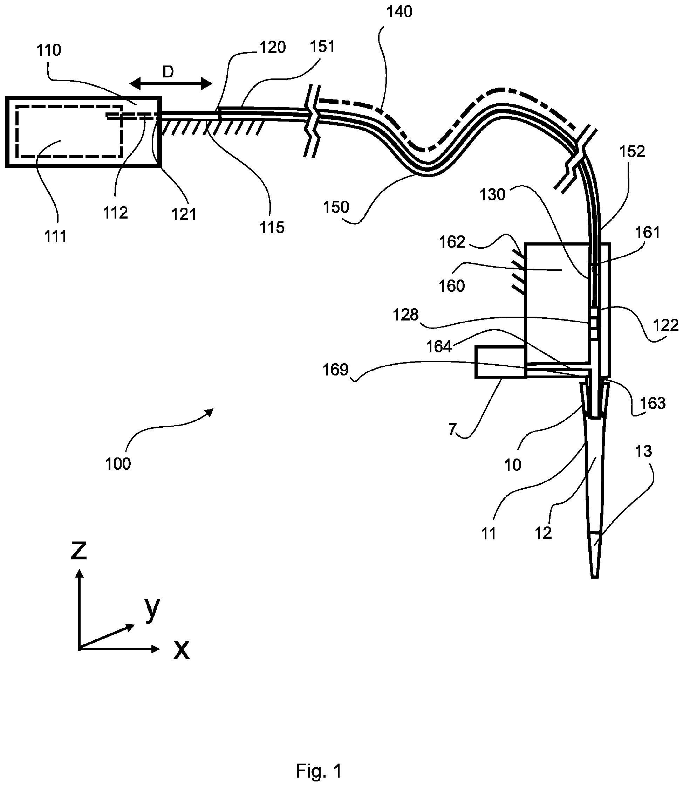

Fig. 1 shows an embodiment of a dosing tool 100. The dosing tool comprises a drive unit 110 comprising a motor 111, and a spindle 112 driven by the motor. A piston 120 is fixed to the runner (spindle) at a proximal end 121 of the piston 120. During operation the drive unit 110 will shift the spindle 112 back and forth along an extending direction 'D' and thus also move the piston 120 longitudinal along the axis of the piston.

The piston 120 is driven inside a dosing channel 130. The dosing channel 130 is defined by a rigid dosing chamber 160 and a flexible cylinder 150. The flexible cylinder extends between the proximal end 121 of the piston arranged at the drive unit to the dosing chamber 160 to which it is attached. The dosing chamber 160 is formed of a cylinder block having a cylinder channel 161 defining a part of the dosing channel 130. The distal end 122 of the piston 120 is arranged within the cylinder channel and will slide back and forth along the direction C in the cylinder channel 161.

The flexible cylinder 150 is fixed to the dosing chamber 160 at a distal end 152 of the flexible cylinder and to a drive anchor point 115 to which the drive unit also is attached 110 at the proximal end 151 of the flexible cylinder. The drive anchor point 115 ensures that the drive unit 110 and the distal end 152 cannot move relative to each other. Providing such an anchor point can be done in different manners. The distal end 152 of the flexible cylinder can be attached to the drive unit itself (not shown) or it may be attached to a common base to which the drive unit also is attached.

Similarly, the dosing chamber 160 is fixed to a chamber anchor point 162. Since the distal end 152 of the flexible cylinder is attached to the dosing chamber it is also fixed to the chamber anchor point 162.

The piston 120 and the dosing channel 130 comprising the flexible cylinder 150 together define a transversely flexible section 140 extending between the dosing chamber 160, fixed to the drive anchor point 115 and the drive unit 110, fixed to the chamber anchor point. The flexible section describe a flexible area wherein the piston 120 and the flexible cylinder 150 can move flexibly in the lateral direction transverse to the extending direction of the piston and cylinder. This allows for the drive anchor point, and thus the drive unit, and the chamber anchor point, and thus the dosing chamber, to move relative to each other.

The dosing chamber 160 is configured to receive a pipette tip 11. The dosing tool 100 comprises a connector, such as a cone at a distal end. Specifically, the distal end 163 of the cylinder channel 161 has a cone-shaped tip 169. The cone-shaped tip can receive and seal the pipette tip 11. The cone-shaped tip 169 has the same inner diameter as the cylinder channel 161. The outer diameter of the cone-shaped tip 169 reduces towards the sample 13 aspirated within the pipette tip 11. The cone-shaped tip 169 may be an integral-distal part of the dosing chamber 160 that has a chamfered outer surface with a diameter reducing towards the distal end of the cylinder channel 161. The cone-shaped tip 169 can be a separate part connected to the distal opening of the cylinder channel 161. The piston 120 can move within the cone-shaped tip 169. Furthermore, a locking mechanism 10 for the pipette tip 11 is provided around the cone-shaped tip 169 for airtight connection of the pipette tip 11 to the cone-shaped tip 169.

During dosing, the distal end 122 of the piston 120 engages with the distal end 163 of the cylinder channel 161 and a dead- and working volume 12 of the dosing tool is defined. The piston 120 has a piston sealing 128 at a distal end of the piston 120 to provide an air-tight seal between the piston 120 and the cylinder channel 161. The channel volume defined by the cylinder channel 161, the cone-shaped tip 169 and the pipette tip 11 is dead- and working-volume 12 of the dosing tool. The dead- and working-volume 12 of the dosing tool can be described as the area within an inner channel below the piston sealing 128 and above the aspirated sample 13.

Furthermore, the dead- and working volume 12 communicates with a pressure sensor 7. The pressure sensor 7 is connected to the working volume in the cylinder block 160 by means of an inner channel 164, which has a preferably small diameter, preferably between 2 to 5 mm. The sensor 7 can sense the pressure of a part of the cylinder channel 161 to which the sensor 7 is connected. This enables pressure monitoring of the working volume and is used for the dosing process during aspiration and dispensing of the sample 13.

The cylinder block 160 of the dosing tool can for example be attached to a carrier arm system of the liquid handling device, so that the carrier arm is able to position the pipette tip relatively to the meniscus of the liquid volume.

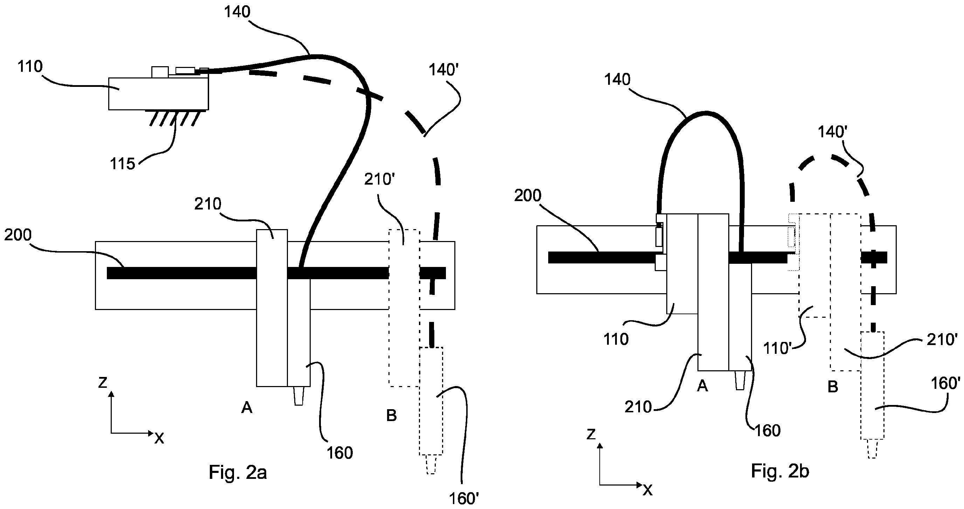

Figure 2a shows schematically two positions A and B of a dosing tool 100 as disclosed herein and as positioned in a liquid handling device (not shown) relative to a Cartesian coordinate system Z, X as indicated in the drawing. Components of the dosing tool that are moved between A and B are shown with broken lines in position B. Also, components moved are indicated by a marked reference number, e.g. dosing chamber is referred to with number 160 in position A and as 160' in position B.

The dosing tool 100 can for example be the embodiment as discussed previously with reference to Fig. 1 and thus the same reference numbers are used for similar components. Accordingly, the dosing tool comprises a drive unit 110 connected to a dosing chamber 160 via a transversely flexible section 140.

The drive unit 110 is fixed to a drive anchor point 115 and is stationary arranged within the liquid handling device. The drive anchor point 115 can for example be the housing frame (not shown) of the liquid handling device.

A rail 200 arranged in the liquid handling device guides a carrier arm 210 back and forth along the X direction. The carrier arm 210 can for example be arranged in the position A and B as shown along the rail. However, it may also be arranged in other positions not shown along the X direction.

The dosing chamber 160 of the dosing tool is arranged on the carrier arm 210. The carrier arm 210 guides the dosing chamber 160 up and down along the Z direction. The dosing chamber 160 can for example be arranged in the position A and B as shown along the rail 200 and the carrier arm 210. However, it may also be arranged in other position not shown along the Z direction.

Thus, relative to the stationary position of the drive unit dosing chamber can be moved both along the X direction due to the rail 200 and along Z direction due to the carrier arm 210. The transversely flexible section 140 enables the relative independent movement between drive unit and the dosing chamber since the transversely flexible section will bend and extend as needed as the drive unit and the dosing chamber moves and changes position relative to each other.

This for example allows to place the drive unit decentral of the dosing chamber. As discussed this is for example advantageous to further reduce the size of the dosing chamber construction. Moreover, it allows for larger drive units than used hitherto since the drive units can be placed in areas with less space constraints. Also heat and vibration from the drive unit can be reduced in this manner.

In another embodiment as shown in Fig. 2b the drive unit 110 is arranged and fixed on the carrier arm 210, while the dosing chamber 160 is arranged on the carrier arm such that it can be moved up and down along the Z direction.

In this embodiment both the drive unit and the dosing chamber 160 moves along the X direction and thus maintain their relative position along the X direction. However, while the drive unit 110 is fixed to the carrier arm 210 the dosing chamber can be moved along the Z direction and thus the relative position between the drive unit 110 and the dosing chamber 160 can change in that dimension.

As discussed previously, such change in the relative position between the drive unit and the dosing chamber is achieved by the transversely flexible section 140.

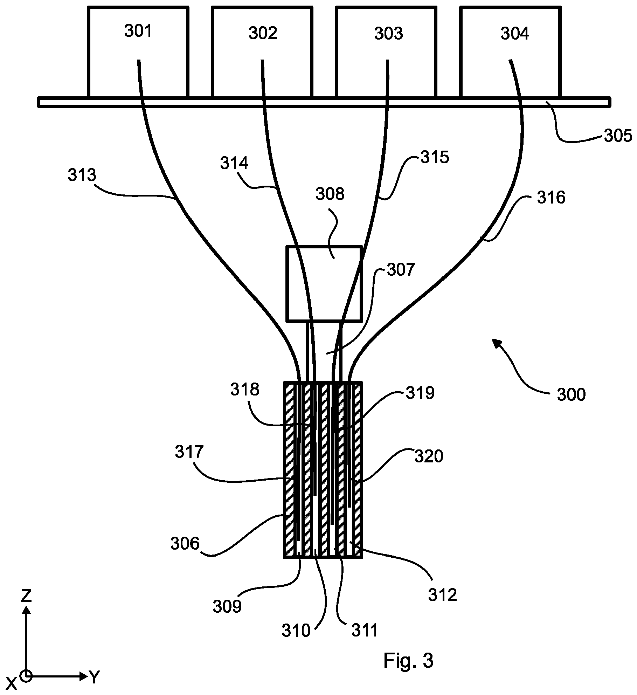

An embodiment of a multi-channel dispensing device 300 which is enabled by the dosing tool as disclosed herein is shown in Fig. 3.

Four drive units 301, 302, 303 and 304 area arranged at a common location 305, e.g. on the frame of a liquid dispensing device.

A dosing chamber 306 is arranged on a carrier arm 307 which allow the dosing chamber to move up and down along the Z direction. The carrier arm 307 is arranged on a rail 308 which allows the carrier arm to move back and forth along the X direction, which in the current view is perpendicular on the drawing.

The dosing chamber is provided with four dosing channels 309, 310, 311 and 312.

A transversely flexible section 313, 314, 315 and 316 connects each drive unit with a respective dosing channel.

This allows for several improvements. As discussed, larger drive units can be used since they can be placed decentral from the dosing chamber.

Also, as shown schematically, pistons 317, 318, 319 and 320 arranged between each drive unit and dosing channel can be activated and engaged individually which allow for different working volumes and independent pipetting. Such individual control of each dosing channel can be implemented in a multi-channel tool. Thus, the teaching as shown in respect of the current embodiment with four channels can be applied to e.g. eight channels or any other number of channels.

### Reference numbers

dosing tool 100
drive unit 110; 301, 302, 303, 304
motor 111
spindle 112
piston 120; 317, 318, 319, 320
proximal end 121 of the piston 120
distal end 122 of the piston 120
dosing channel 130; 309, 310, 311, 312
rigid dosing chamber 160; 306
flexible cylinder 150
proximal end 151 of the flexible cylinder 150
distal end 152 of the flexible cylinder 150
cylinder channel 161
distal end 163 of the cylinder channel 161
drive anchor point 115
chamber anchor point 162
transversely flexible section 140; 313, 314, 315, 316
pipette tip 11
cone-shaped tip 169
sample 13
locking mechanism 10
dead- and working-volume 12
piston sealing 128
pressure sensor 7
inner channel 164
rail 200; 308
carrier arm 210; 307
multi-channel dispensing device 300
common location 305

### Embodiments

1. A dosing tool for aspirating or dispensing a sample, the dosing tool comprising:
   - a piston movably arranged within a dosing channel, the piston comprising a distal end movably arranged within a dosing chamber and a proximal end,
   - a drive unit engaging with the proximal end of the piston and configured to drive the piston by applying a force in an extending direction of the piston within the dosing channel,
   wherein the dosing chamber is configured to receive a pipette tip, and wherein the piston and the dosing channel comprise a transversely flexible section extending between the dosing chamber and the drive unit.
2. The dosing tool according to embodiment 1, configured such that the drive unit is decentralised away from the working volume in a manner flexible in the transverse direction to the extending direction.
3. The dosing tool according to any one of the preceding embodiments, wherein the dosing tool is arranged such that the drive unit and the dosing chamber are moveable relative to each other.
4. The dosing tool according to any one of the preceding embodiments, wherein the transversely flexible section of the piston is more stiff in the extending direction than in the transverse direction and flexible transverse to the extending direction.
5. The dosing tool according to any one of the preceding embodiments, further comprising the dosing channel wherein the dosing channel comprises a dosing chamber and a flexible part.
6. The dosing tool according to any of the preceding embodiments, wherein the dosing chamber is a cylinder block, having a pipetting channel oriented vertically within the cylinder block, and configured such that the distal end of the piston is slidable within the pipetting channel.
7. The dosing tool according to embodiment 6, further comprising a piston seal arranged between the piston and the cylinder block configured to provide an airtight seal between the piston and the cylinder block.
8. The dosing tool according to any of the preceding embodiments, wherein the dosing channel comprises a flexible housing, such as a flexible channel, preferably a flexible cylinder, extending between the dosing chamber and the drive unit configured such that the piston extends within the flexible housing.
9. The dosing tool according to embodiment 8, wherein the flexible housing is flexible transverse to the extending direction.
10. The dosing tool according to any one of embodiments 8-9, wherein the flexible housing is a tube made of plastic material, selected from the group of PTFE, PEEK or PE.
11. The dosing tool according to any one of embodiments 8-9, wherein the flexible housing is a laterally flexible metal mesh hose.
12. The dosing tool according to any of the preceding embodiments, wherein the piston is made of a material selected from the group of: stainless steel hose, titan-nickel alloy hose, carbon- or glass-reinforced thermoplastic laminates.
13. The dosing tool according to any of the preceding embodiments, wherein the piston comprises a coating such as Teflon or PTFE coating.
14. The dosing tool according to any of the preceding embodiments, further comprising a sensor configured to detect pressure of the working volume.
15. The dosing tool according to any of the preceding embodiments, wherein the drive unit comprises an electric motor having a rotor configured to move the piston.
16. The dosing tool according to any of the preceding embodiments, wherein the drive unit comprises an electric motor having a spring-preloaded arrangement configured to move the piston.
17. The dosing tool according to any of the preceding embodiments, wherein the drive unit comprises a linear motor having a rotor configured to move the piston.
18. The dosing tool according to any of the preceding embodiments, further comprising a connection element having an opening and provided at a distal opening of the dosing channel, wherein the connection element is configured to receive a pipette tip.
19. The dosing tool according to any of the preceding embodiments, wherein the dosing tool comprises a plurality of pistons and a plurality of drive units, wherein each one of the pistons engages with one drive unit.
20. The dosing tool according to any of the preceding embodiments, wherein the working volume is in the range of 0.1 µl -1000 µl.
21. The dosing tool according to any of the preceding embodiments, wherein the working volume is in the range of 1000 µl -10000 µl.
22. The dosing tool according to any of the preceding embodiments, wherein the working volume is in the range of 0.1 µl -10000 µl.
23. A dosing system, comprising a plurality of dosing tools according to any one of the embodiments 1- 22 for receiving a plurality of pipette tips, wherein each one of the drive unit of each dosing tool is decentralised away from the corresponding dosing chamber in a manner flexible in the transverse direction to the extending direction, such that each drive unit and the corresponding dosing chamber are moveable relative to each other.
24. The dosing system according to embodiment 23, further comprising a carrier arm movable in the extending direction, wherein the plurality of dosing tools is parallel next to one another and coupled to the carrier arm.
25. The dosing system according to any one of the embodiments 23 - 24, further comprising a plurality of pipette tips.
26. The dosing system according to embodiment 25, wherein each of the pipette tips is received by a respective dosing tool of the plurality of dosing tools, wherein the dosing tools are configured such that each of the plurality of dosing tools is driven individually in the extending direction, and in the transverse direction thereby spreading the movement of each of the pipette tips.
27. The dosing system according to any one of the embodiments 23 - 26, wherein the distance between the neighbouring pipette tips is between 4.5-150 mm, preferably between 9-150 mm.
28. The dosing system according to any one of the embodiments 23 - 27, wherein the dosing tools are arranged at a distance of 4.5 mm or more, preferably 9 mm or more measurable between a central line of neighbouring dosing tools.
29. A liquid handling device for handling laboratory samples, comprising:
   - a worktable area;
   - multiple predefined workstations for laboratory items in the worktable area that have a format adapted to the footprint of a standardised microtiter plate,
   - a carrier arm for moving tools above the work area;
   - at least one dosing tool according to any one of the claims 1-22, wherein at least a dosing chamber of the dosing tool can be moved by means of the carrier arm, configured such that the at least one dosing chamber picks up and releases pipette tips and/or aspirates and dispenses samples by means of the pipette tips in the worktable area.
30. The liquid handling device according to embodiment 29, comprising a dosing system according to any one of the embodiments 23 - 28.
31. A method for handling laboratory samples, the method comprising:
   - providing a carrier arm for moving tools above a worktable area;
   - providing a plurality of dosing tools according to any one of the embodiments 1 - 22; and configured such that the plurality of dosing chambers of the dosing tools is movable by means of the carrier arm;
   - receiving pipette tips from a pipette tip carrier on a predefined workstation in the worktable area by the plurality of dosing chambers;
   wherein the pipette tips aspirate or dispense samples independently by each one of the plurality of dosing tools.
32. The method according to embodiment 31, further comprising the step of providing pipette tips in a pipette tip carrier on a predefined workstation in the worktable area.
33. The method according to any one of the embodiments 31 - 32, comprising the step of providing a dosing system according to any one of the embodiments 23 - 28.
34. The method according to any one of the embodiments 31 - 33, wherein the laboratory samples are handled within a liquid handling device according to any one of the embodiments 29 - 30.
35. A computer implemented method for handling laboratory samples independently wherein the method comprises the steps of:
   - providing a plurality of dosing tools according to any one of the embodiments 1 - 22,
   - receiving a set of condition parameters, wherein the set of condition parameters is related to sample handling, such as sample aspiration and dispensing volume and positioning, and
   - operating the corresponding drive unit for each dosing tools based on the received set of condition parameters.
36. The computer implemented method according to embodiment 35, further comprising the step of providing a method according to any one of the embodiments 31 - 34.

## Claims

1. A dosing tool (100) for aspirating or dispensing a sample (13), the dosing tool (100) comprising:
- a piston (120; 317, 318, 319, 320) movably arranged within a dosing channel (130; 309, 310, 311, 312), the piston (120; 317, 318, 319, 320) comprising a distal end (122) movably arranged within a dosing chamber (160; 306) and a proximal end (121),
- a drive unit (110; 301, 302, 303, 304) engaging with the proximal end (121) of the piston (120; 317, 318, 319, 320) and configured to drive the piston (120; 317, 318, 319, 320) by applying a force in an extending direction of the piston (120; 317, 318, 319, 320) within the dosing channel (130; 309, 310, 311, 312),
wherein the dosing chamber (160; 306) is configured to receive a pipette tip (11), and
wherein the piston (120; 317, 318, 319, 320) and the dosing channel (130; 309, 310, 311, 312) comprise a transversely flexible section (140; 313, 314, 315, 316) extending between the dosing chamber (160; 306) and the drive unit (110; 301, 302, 303, 304).

2. The dosing tool (100) according to claim 1, wherein the dosing tool (100) is arranged such that the drive unit (110; 301, 302, 303, 304) and the dosing chamber (160;306) is moveable relative to each other.

3. The dosing tool (100) according to claim 1 or 2, wherein the transversely flexible section (140; 313, 314, 315, 316) of the piston (120; 317, 318, 319, 320) is more stiff in the extending direction than in the transverse direction and flexible transverse to the extending direction.

4. The dosing tool (100) according to any one of the preceding claims, further comprising that the dosing channel (130; 309, 310, 311, 312) comprises a dosing chamber (160; 306) and a flexible part (140; 313, 314, 315, 316).

5. The dosing tool (100) according to any of the preceding claims, wherein the dosing channel (130; 309, 310, 311, 312) comprises a flexible housing, such as a flexible channel, preferably a flexible cylinder (150), extending between the dosing chamber (160; 306) and the drive unit (110; 301, 302, 303, 304) configured such that the piston (120; 317, 318, 319, 320) extends within the flexible housing.

6. The dosing tool (100) according to claim 5, wherein the flexible housing is flexible transverse to the extending direction.

7. The dosing tool (100) according to claim 5 or 6, wherein the flexible housing (150) is a tube made of plastic material, selected from the group of PTFE, PEEK or PE, wherein the piston is made of a material selected from the group of: stainless steel hose, titan-nickel alloy hose, carbon- or glass-reinforced thermoplastic laminates, and wherein the piston (120; 317, 318, 319, 320) comprises a coating such as Teflon or PTFE coating.

8. The dosing tool (100) according to any of the preceding claims, wherein the dosing tool (100) comprises a plurality of pistons (120; 317, 318, 319, 320) and a plurality of drive units (110; 301, 302, 303, 304), wherein each one of the pistons (120; 317, 318, 319, 320) engages with one drive unit (110; 301, 302, 303, 304).

9. A dosing system (300), comprising a plurality of dosing tools (100) according to claims 1- 22 for receiving a plurality of pipette tips (11), wherein each one of the drive unit (110; 301, 302, 303, 304) of each dosing tool (100) is decentralised away from the corresponding dosing chamber (160; 306) in a manner flexible in the transverse direction to the extending direction, such that each drive unit (110; 301, 302, 303, 304) and the corresponding dosing chamber (160; 306) are moveable relative to each other.

10. The dosing system (300) according to claim 9, further comprising a carrier arm (210; 307) movable in the extending direction, wherein the plurality of dosing tools (100) are parallel next to one another and coupled to the carrier arm (210; 307).

11. The dosing system (300) according to claim 9 or 10, wherein the dosing system further comprises a plurality of pipette tips (11) and each of the pipette tips (11) is received by a respective dosing tool (100) of the plurality of dosing tools (100), wherein the dosing tools (100) are configured such that each of the plurality of dosing tools (100) is driven individually in the extending direction, and in the transverse direction thereby spreading the movement of each of the pipette tips (11).

12. A liquid handling device for handling laboratory samples, comprising:
- a worktable area;
- multiple predefined workstations for laboratory items in the worktable area that have a format adapted to the footprint of a standardised microtiter plate,
- a carrier arm (210; 307) for moving tools (100) above the work area;
- at least one dosing tool (100) according to any one of the claims 1-822,
wherein at least a dosing chamber (160; 306) of the dosing tool (100) can be moved by means of the carrier arm (210; 307), configured such that the at least one dosing chamber (160; 306) picks up and releases pipette tips (11) and/or aspirates and dispenses samples (13) by means of the pipette tips (11) in the worktable area.

13. The liquid handling device according to claim 12, comprising a dosing system (300) according to any one the claims 9-11.

14. A method for handling laboratory samples, the method comprising:
- providing a carrier arm (210; 307) for moving tools (100) above a worktable area;
- providing a plurality of dosing tools (100) according to any one of the claims 1 - 8; and configured such that the plurality of dosing chambers (160; 306) of the dosing tools (100) is movable by means of the carrier arm (210; 307);
- receiving pipette tips (11) from a pipette tip carrier on a predefined workstation in the worktable area by the plurality of dosing chambers (160; 360);
wherein the pipette tips (11) aspirate or dispense samples (13) independently by each one of the pluralities of dosing tools (100).

15. The method according to claim 14, comprising the step of providing a dosing system (300) according to any one of the claims 9-11.

16. The method according to claim 14 or 15, wherein the laboratory samples are handled within a liquid handling device according to claim 12 or 13.
